# EUROPEAN PATENT SPECIFICATION

(11) **EP 2 351 629 B1**
(45) Date of publication and mention of the grant of the patent: **14.05.2014**
(21) Application number: 09817613.4
(22) Date of filing: 03.09.2009
(51) Int. Cl.: B23Q 3/18, B23Q 17/22, G01M 1/02, G05B 19/404

(54) **CENTERING DEVICE AND CENTERING METHOD**
ZENTRIERVORRICHTUNG UND ZENTRIERVERFAHREN
DISPOSITIF ET PROCÉDÉ DE CENTRAGE

(30) Priority: 30.09.2008 JP 2008254067; 22.12.2008 JP 2008325964
(43) Date of publication of application: 03.08.2011
(73) Proprietor: NTN Corporation, Osaka-shi, Osaka 550-0003 (JP)
(72) Inventor: HARADA Haruhisa, Iwata-shi Shizuoka 438-0037 (JP); NAGURA Genji, Iwata-shi Shizuoka 438-0037 (JP)
(74) Representative: Mischung, Ralf
(86) International application number: PCT/JP2009/065386
(87) International publication number: WO 2010/038576

(56) References cited:
- EP-A1- 1 941 970
- EP-A2- 0 350 799
- JP-A- 2 059 254
- JP-A- 5 004 139
- JP-A- 9 066 412
- JP-A- 61 114 012
- JP-A- 2008 046 113
- JP-U- 2 066 816
- US-A- 3 231 979

## Description

### Technical Field

The present invention relates to a centering device and a centering method.

### Background Art

At the time of manufacturing of a ring-shaped structure (ring-shaped worked product) such as an inner race and outer race of a bearing, the ring-shaped worked product undergoes a lathing step and a grinding step. Thus, in such steps, the ring-shaped worked product (work) is required to undergo centering performed by a centering device.

Conventionally, when grinding is performed on a ring-shaped worked product such as a large bearing, the work is temporarily placed on a grinder. Then, a skilled worker applies a gage for measuring decentering to an outer periphery of the workpiece so as to measure, while rotating the workpiece, a fluctuation amount during one round of the workpiece. After that, the skilled worker performs predetermined centering by hitting the vicinity of a maximum fluctuation position with a hammer. That is, in such manual centering work performed by workers, a skilled worker measures an eccentric amount of a workpiece using a dial gage. When an obtained result is out of an allowable range, the worker hits the workpiece with use of a hammer and the like. In the manual centering work, measurement and hitting are repeated until the eccentric amount falls within the allowable range. However, this work is completely manual, and hence it is difficult to quantify a relation between a hitting position and a hitting force.

Under the circumstance, in recent years, there have been proposed mechanical automatic centering devices which eliminate necessity for centering performed by skilled workers (Patent Literatures 1 and 2).

The centering device described in Patent Literature 1 includes a rotational-angle-position detector for detecting a rotational angle position of a rotary table, a radial deflection sensor for detecting radial deflection of an object to be processed, a calculation control circuit for calculating, based on detection results of the detectors, a rotational angle and a correction amount of an object to be processed to be deflected, and a corrector for pressing the object to be processed to a rotation center side with a correction head.

Further, the centering device described in Patent Literature 2 includes first measuring means, first position-adjusting means, second measuring means, second position-adjusting means, position fixing means, and control means.

### Citation List

### Patent Literature

Patent Literature 1: JP 60-238258 A
Patent Literature 2: JP 2004-345029 A

From US 3,231,979, a centering device is known where eccentricity is detected with a prop and capacitors are charged correspondingly in order to supply energy to a solenoid acting on a hammer at certain rotational positions of the workpiece to be centered.

EP 350 799 A2 discloses an automatic work part centering mechanism using a pneumatic centering hammer for applying a controlled striking force on a workpiece, pressurize air being supplied to a solenoid valve which is controlled to open and close pressure supply to a pneumatic cylinder moving the hammer.

### Summary of Invention

### Technical Problems

However, in the above-mentioned centering device described in Patent Literature 1, a digital scale for measuring an eccentric amount is provided in a mechanism of the correction head. Thus, the whole structure of the device is complicated and expensive. In addition, when centering of a large workpiece is performed with such a device, a high load is applied to the correction head. Thus, a member supporting the head receives a reactive force of the load. Accordingly, it is difficult to mount a gauge for measuring an eccentric amount to such a member in terms of accuracy.

Further, the centering device described in Patent Literature 2 includes the first measuring means, the first position-adjusting means, the second measuring means, the second position-adjusting means, the position fixing means, and the control means. Thus, the centering device is as structurally complicated as or more so than the centering device described in Patent Literature 1.

In view of the problems just described above, the present invention provides a centering device and a centering method which enable simplification of the entire device and are capable of stably performing centering on a work.

### Solution to Problems

A centering device according to the present invention includes: a rotary table for rotating a work; displacement detecting means for detecting an eccentric amount of the work which rotates through intermediation of the rotary table; and hammer means for correcting, by means of an impact on the work, the eccentric amount detected by the displacement detecting means.

According to the centering device of the present invention, the eccentric amount of the work can be detected by the displacement detecting means. Further, an impact force is imparted to the work by the hammer means, and hence the detected eccentric amount can be corrected.

The displacement detecting means includes: a displacement sensor for detecting an eccentric degree of the work; and a phase-detection sensor for detecting a rotational-angle phase of the rotary table, and selects, based on the eccentric degree sensed by the displacement sensor and the rotational-angle phase detected by the phase-detection sensor, an optimum hitting force from preset conditions.

Based on the detected value, the optimum hitting force is selected from the preset conditions, and hence optimum centering can be performed.

The hammer means include: a lever capable of pivotal movement about a fulcrum on a proximal-end side; and a weight attached to a distal end of the lever, and impart, with use of the weight, an impact force on the work at an angular speed determined based on a pivot angle degree and a pivoting speed of the weight and the lever. With this setting, the lever is rockable about the fulcrum on the proximal-end side, and hence an impact reactive force, which is caused by an impact to the work, to the hammer means can be alleviated.

The work may include a workpiece processed with a vertical grinder and a workpiece processed with a horizontal grinder. In addition, after detection of the eccentric amount of the work, the eccentric amount can be corrected even under a state in which rotation of the work is stopped.

The centering method according to the present invention includes: detecting an eccentric amount of a work which rotates through intermediation of a rotary table; performing, with an impact force imparted by hammer means onto the work, a centering operation for correcting the eccentric amount; and repeating the centering operation until the eccentric amount reaches a preset target convergence value.

A centering method according to the present invention includes: detecting an eccentric amount of a work which rotates through intermediation of a centering rotary table; performing, with an impact force imparted by hammer means onto the work, a centering operation for correcting the eccentric amount; and repeating the centering operation until the eccentric amount reaches a preset target convergence value, in which: a relation between the eccentric amount of the work and the phase of the rotary table at a time of one round of the work is calculated; and the centering operation is repeated until the eccentric amount falls within the target convergence value.

### Advantageous Effects of Invention

In the present invention, it suffices that, in accordance with a detected eccentric amount, an impact force is imparted to the work with use of the hammer means. Thus, centering can be easily performed. In addition, an optimum hitting force is selected from the preset conditions based on a detected value, and hence optimum centering can be performed. Thus, centering can be performed with relatively high accuracy.

When an impact force is imparted to the work at an angular speed determined based on a pivot angle degree and a pivoting speed of the weight and the lever, collision energy (impact force) generated by the pivotal movement of the weight about the fulcrum is imparted. Thus, an object can be moved with a force smaller than a pushing force for moving an object in a horizontal direction. In addition, the impact reactive force to the hammer means can be alleviated. Thus, durability of the device can be enhanced, and stable centering can be performed over a long period of time. In addition, the hammer means itself constitutes a reactive-force absorbing structure, and hence it is unnecessary to separately constitute a reactive-force absorbing structure. Thus, space saving and cost reduction of the entire device can be achieved.

When the hammer means causes the weight to collide against the work with the resilient force of the elastic member, the weight moves while being guided by the rod, and hence an impact force can be stably imparted to the work. As a result, correction accuracy can be enhanced.

The centering device may be used for the vertical lathe and the horizontal lathe, and the vertical grinder and the horizontal grinder. Thus, working with the lathes or the grinders can be performed with higher accuracy.

According to the method of the present invention, centering can be performed until a target convergence value is achieved, and hence centering can be performed with high accuracy.

### Brief Description of Drawings

[Fig. 1] A front view of a centering device of the present invention.
[Fig. 2] A rear view of the centering device.
[Fig. 3] A plan view of the centering device.
[Fig. 4] A main-part enlarged plan view of the centering device.
[Fig. 5] An enlarged view of hammer means of the centering device.
[Fig. 6] A plan view of the hammer means of the centering device.
[Fig. 7] A main-part enlarged view of the hammer means of the centering device.
[Fig. 8] A schematic block diagram of a control portion of the centering device.
[Fig. 9] A flow chart of a centering method of the present invention.
[Fig. 10] A front view of another centering device of the present invention (not claimed).
[Fig.11] A plan view of the centering device of Fig. 10.
[Fig. 12] A main-part enlarged plan view of the centering device of Fig. 10.
[Fig. 13] An enlarged view of hammer means of the centering device of Fig. 10.
[Fig. 14] A side view of the hammer means of the centering device of Fig. 10.
[Fig. 15] An enlarged front view of the hammer means of the centering device of Fig. 10.
[Fig. 16] An enlarged plan view of the hammer means of the centering device of Fig. 10.

### Description of Embodiments

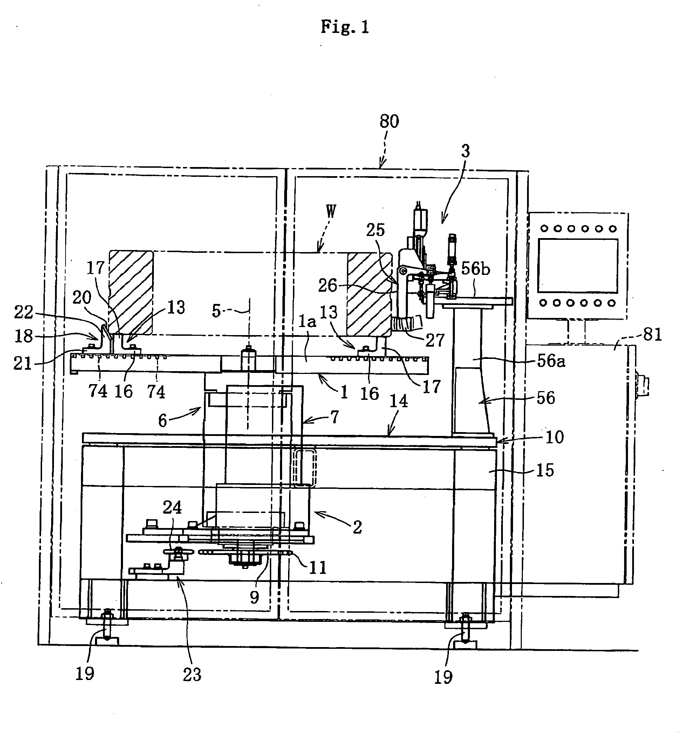

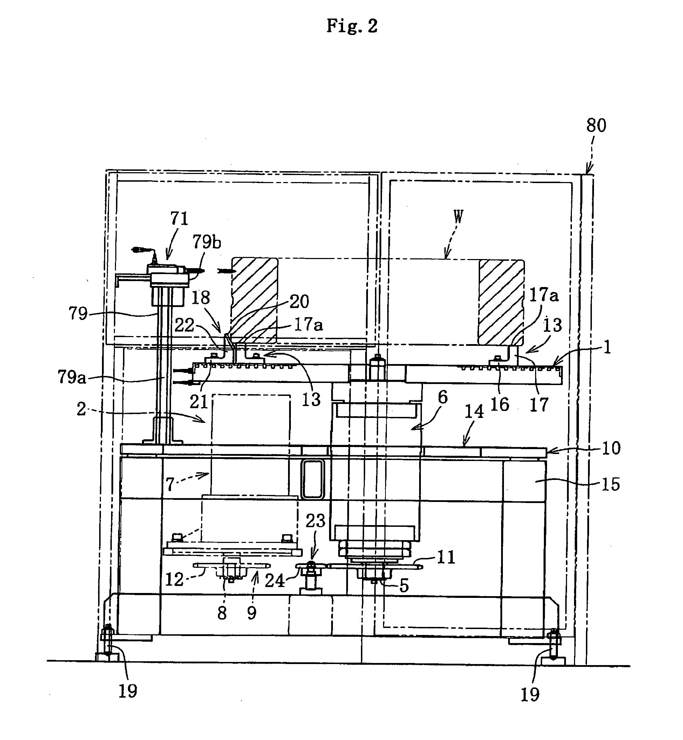

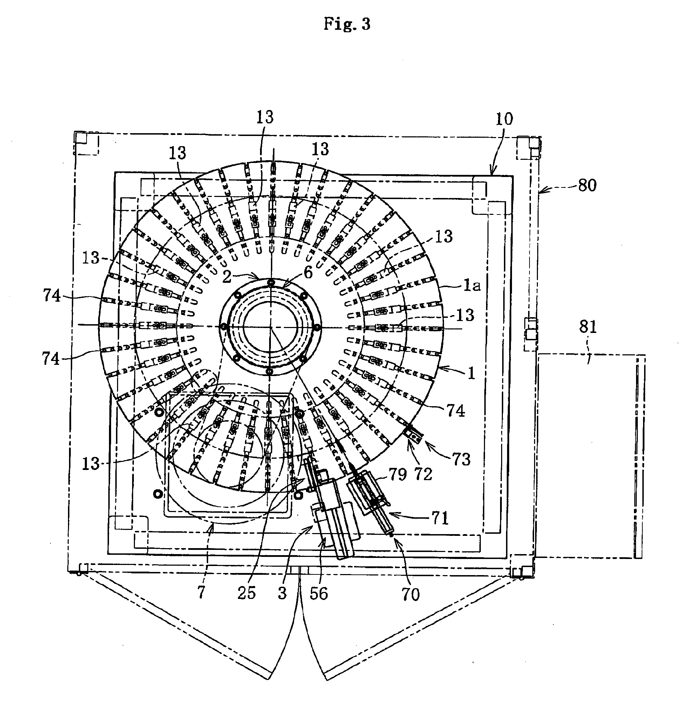

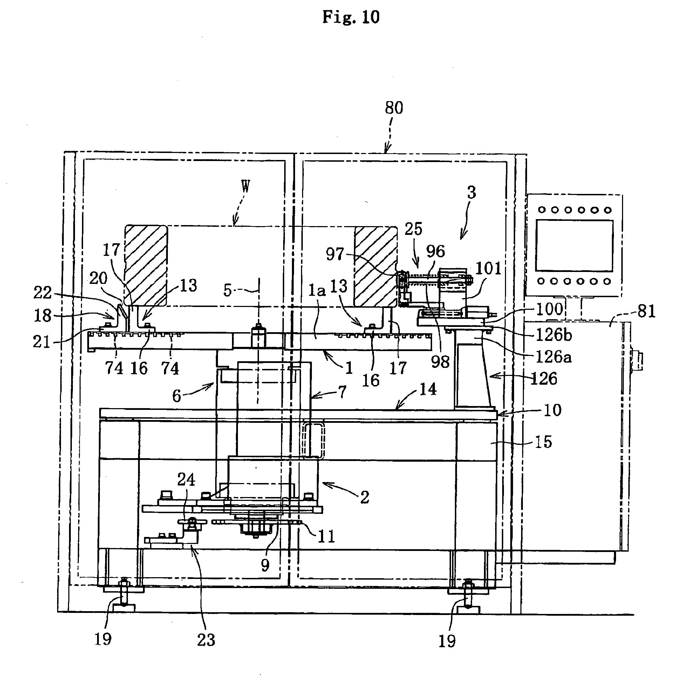

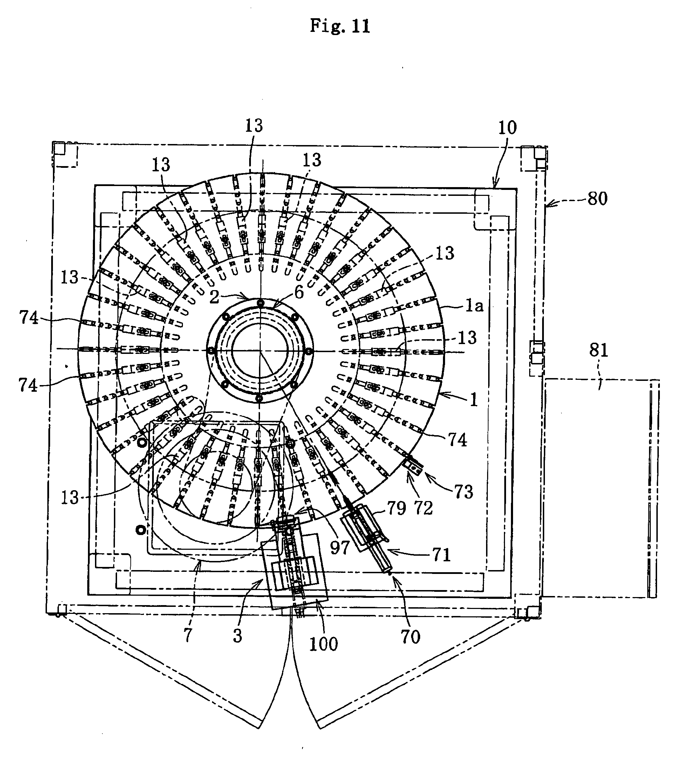

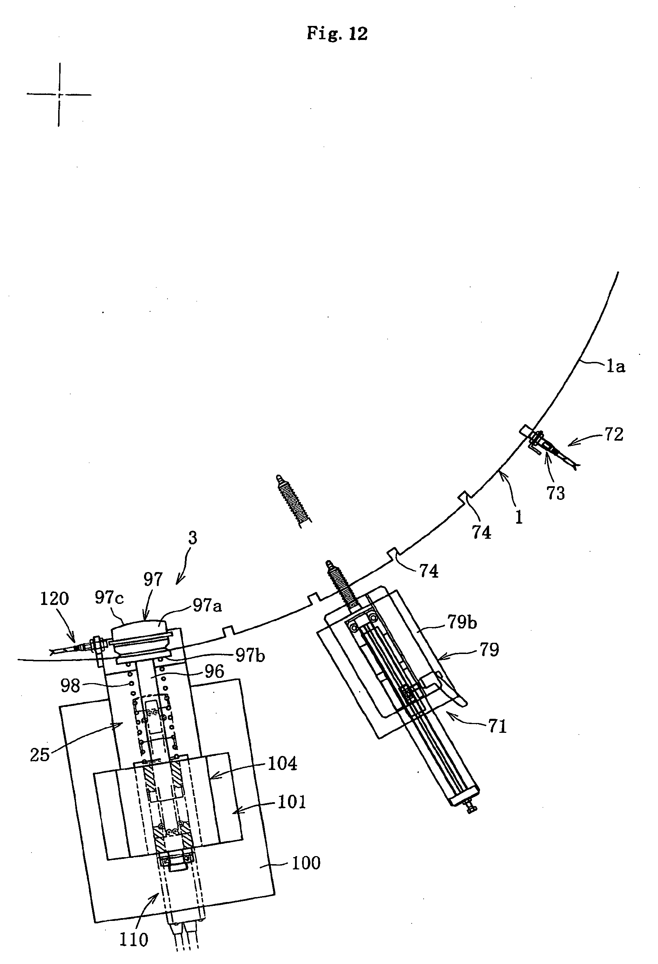

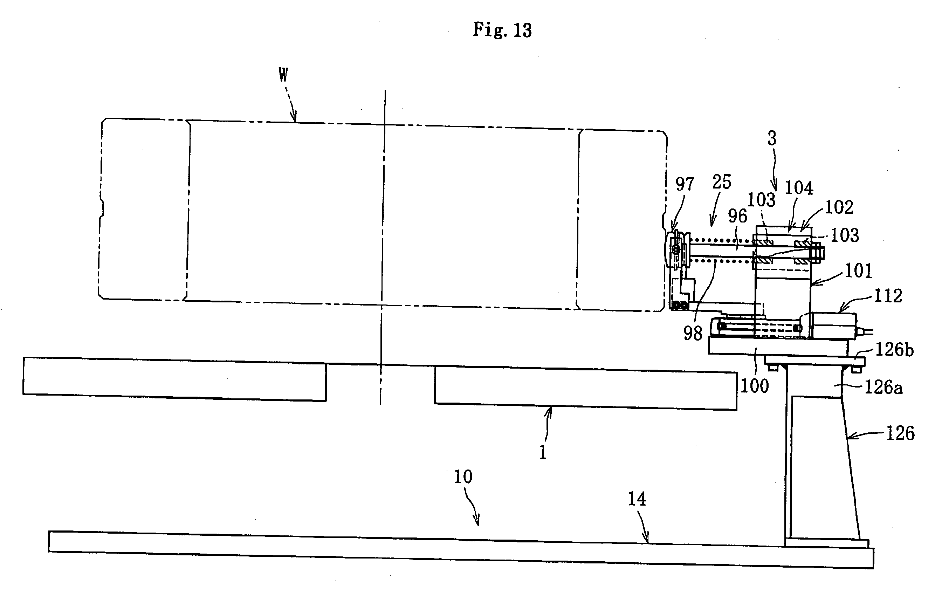

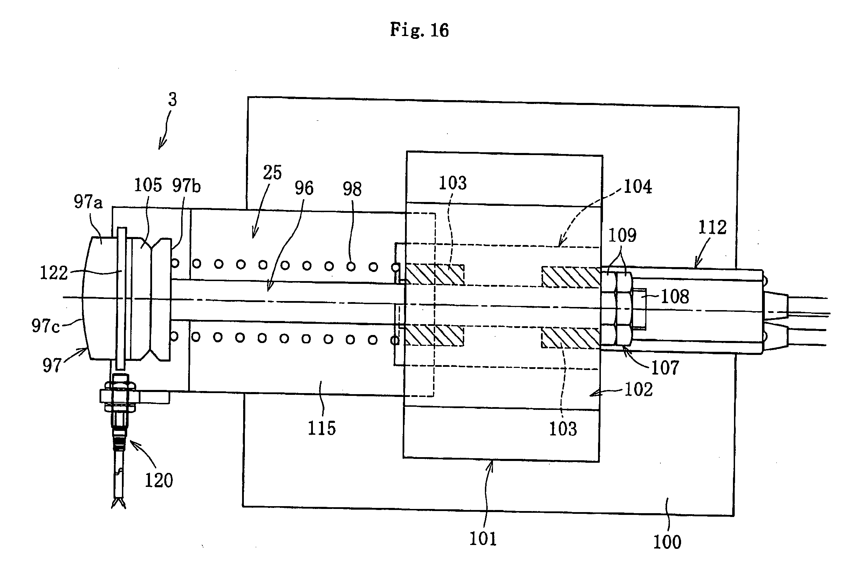

In the following, description is made of embodiments of the present invention with reference to Figs. 1 to 9. Figures 10 to 16 relate to an embodiment not claimed with this application.

Figs. 1 to 3 illustrate a centering device according to the present invention. The centering device includes a rotary table 1 on which a work W is placed, a drive mechanism 2 for rotating the rotary table 1 about an axis thereof, and an impacting structure 3 for imparting an impact force on the work W (ring-shaped workpiece such as an inner race and outer race of a bearing) on the rotary table 1.

The drive mechanism 2 includes a bearing structure 6 for rotatably supporting a central shaft 5 of the rotary table 1 about an axis thereof, a drive motor 7, and an interlocking member 9 for interlockingly coupling an output shaft 8 of the drive motor 7 and the central shaft 5 to each other. The interlocking member 9 includes a sprocket 11 mounted to the central shaft 5 of the rotary table 1, a sprocket 12 mounted to the output shaft 8 of the drive motor 7, and a chain (not shown) looped around those sprockets 11 and 12. The bearing structure 6 and the drive motor 7 are supported by a base 10. The base 10 includes a base plate 14 and a leg member 15 for supporting the base plate 14. Further, adjusters 19 are each attached to lower ends of corner portions of the leg member 15.

Thus, when the drive motor 7 is driven, rotation of the output shaft 8 thereof is transmitted to the central shaft 5 through intermediation of the interlocking member 9, and hence the rotary table 1 is rotated about the axis thereof. Note that, a tensioning mechanism 23 for imparting tension to the chain is provided between the sprockets 11 and 12. That is, the tensioning mechanism 23 includes a rotary disc 24, and press the chain from an outside with use of the rotary disc 24. In this manner, tension is imparted to the chain.

The rotary table 1 is provided with a plurality of work carriers 13 arranged at a predetermined pitch in a circumferential direction. Each of the work carriers 13 is constituted by a horizontal portion 16 fixed to the rotary table 1 and a vertical portion 17 provided upright from a radially outer side of the horizontal portion 16. The work W is received at an upper end surface 17a of the vertical portion 17.

Further, on an outer peripheral side of the work carriers 13, a plurality of rough guides 18 are provided at a predetermined pitch in a circumferential direction. Each of the rough guides 18 includes a guide surface 20 for guiding a corner portion between a lower end surface and a radially outer surface of the work W. That is, each of the rough guides 18 includes a horizontal portion 21 fixed to the rotary table 1 and a vertical portion 22 provided upright from a radially inner side of the horizontal portion 21. A tapered surface is provided on an upper radially inner side of the vertical portion 22, and the tapered surface constitutes the guide surface 20. In order that a decentering amount (eccentric amount) of the work W is not excessive when the work W is placed on the rotary table 1, the guide surfaces 20 of the rough guides 18 are arranged so as to form, in plan view, a circular arc approximately several mm larger than the radially outer surface of the work W.

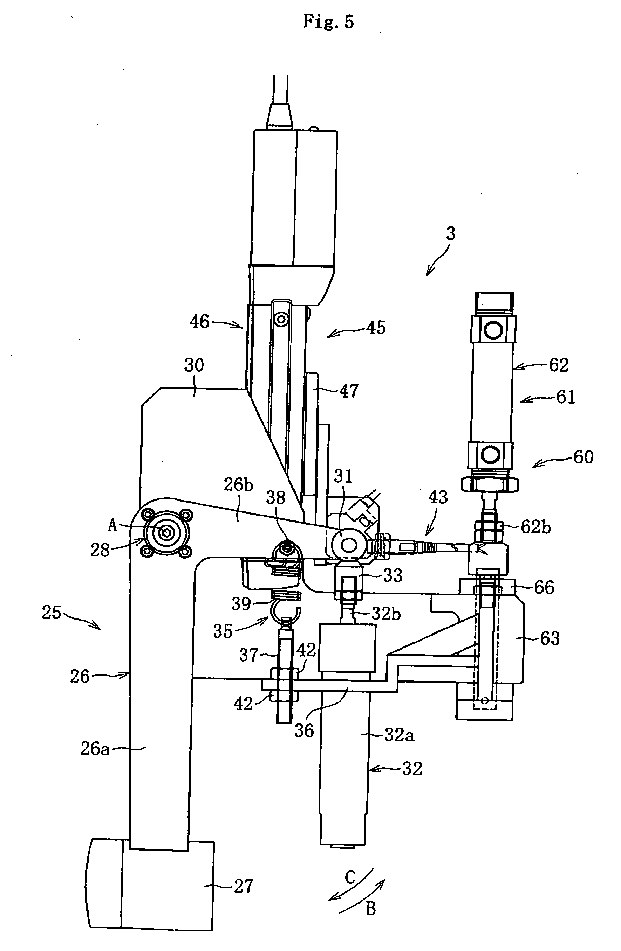

The impacting structure 3 is installed to a support column 56 provided upright from the base plate 14 of the base 10. As illustrated in Fig. 5, the impacting structure 3 includes hammer means 25 for imparting an impact force on the work W. The hammer means 25 includes a lever 26 having an inverted L-shape in front view and a weight 27 attached to a lower end of the lever 26. The lever 26 is constituted by a long piece portion 26a extending in an upper-and-lower direction and a short piece 26b bent substantially at a right angle from an upper end of the long piece portion 26a. The weight 27 is provided continuously with the lower end of the lever 26, that is, a lower end of the long piece portion 26a. Note that, as illustrated in Fig. 1, the support column 56 includes a column portion 56a and a receiving disc 56b provided continuously with an upper end of the column portion 56a.

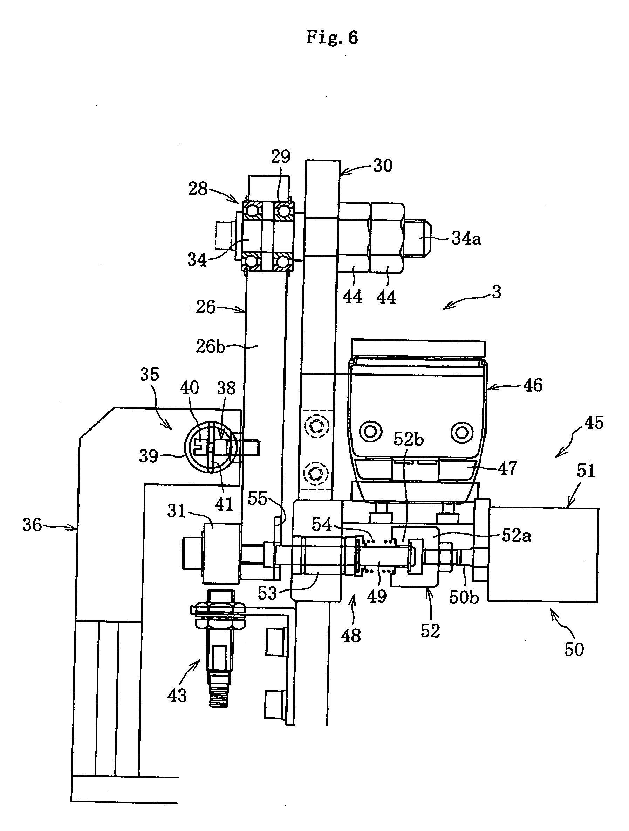

The lever 26 has an upper end portion (corner portion between the long piece portion 26a and the short piece 26b) at which a pivot portion 28 serving as a rocking fulcrum A is pivotally mounted to a support plate 30 (fixed to the receiving disc 56b of the support column 56). The lever 26 rocks about the fulcrum A in directions of arrows B and C. That is, as illustrated in Fig. 6, the bearing (pivot portion) 28 is fitted to the lever 26, and a shaft member 34 protruding from the support plate 30 is insertion-fixed to the bearing 28. With this, the lever 26 rocks about the shaft member. Note that, a threaded shaft portion 34a is passed through the support plate 30, and a nut member 44 is threadedly mounted to the shaft member 34, and hence the shaft member 34 is fixedly mounted to the support plate 30.

The short piece 26b of the lever 26 is provided with a small-diameter roller 31, and the small-diameter roller 31 is pushed up by a push-up cylinder mechanism 32. That is, in the push-up cylinder mechanism 32, a cylinder main body 32a is fixed to a support-plate-30 side, and a presser 33 for pressing the small-diameter roller 31 is attached to a distal end of a piston rod 32b. Thus, when the piston rod 32b of the push-up cylinder mechanism 32 extends, the small-diameter roller 31 is pushed up through intermediation of the presser 33, and the lever 26 rocks about the fulcrum A in the direction of the arrow B.

The short piece 26b of the lever 26 is pulled downward by a pulling mechanism 35. That is, the pulling mechanism 35 includes an arm 36, an elastic-member support rod 37 fixedly mounted to the arm 36, an elastic-member support member 38 fixedly mounted to the short piece 26b of the lever 26, and an elastic member 39 constituted by a coil spring supported by the elastic-member support rod 37 and the elastic-member support member 38. The elastic-member support rod 37 is constituted by a threaded shaft member having a hook hole formed at a distal end thereof, and is threadedly engaged with a nut member 42 provided to the arm 36. Further, as illustrated in Fig. 6, the elastic-member support member 38 includes a support pin 40 protruding from the short piece 26b of the lever 26, and the support pin 40 is provided with an engagement groove 41. Thus, the elastic member 39 has one end portion engaged with the engagement groove 41 of the support pin 40 of the elastic-member support member 38, and another end portion engaged with the hook hole of the elastic-member support rod 37. In this manner, the short piece 26b of the lever 26 is resiliently urged downward.

In this case, as illustrated in Fig. 6, there is provided an angle determination mechanism 45 for determining a swing-down angle of the lever 26. The angle determination mechanism 45 includes an up-and-down movement mechanism 46 constituted, for example, by a single-shaft actuator, and a coupling structure portion 48 attached to a movable table 47 of the up-and-down movement mechanism 46.

The coupling structure portion 48 includes a coupling pin 49 arranged in a horizontal direction and a reciprocating mechanism 50 for reciprocating the coupling pin 49 in the horizontal direction. The reciprocating mechanism 50 includes a cylinder mechanism 51 and a pin-receiving member 52 attached to a distal end of a piston rod 50b of the cylinder mechanism 51. The pin-receiving member 52 is formed of a bottomed cylindrical body, and has a bottom wall 52a with which the distal end of the piston rod 50b is threadedly mounted. Further, an opening portion of the pin-receiving member 52 is provided with an inner flange portion 52b, and one end portion (proximal end portion) of the coupling pin 49 is inserted to the opening portion. In this case, in accordance with up-and-down movement of the movable table 47 of the up-and-down movement mechanism 46, the reciprocating mechanism 50 and the coupling pin 49 move up and down.

The coupling pin 49 is supported by a bearing 53, and an elastic member 54 constituted by a coil spring is interposed between the bearing 53 and the pin-receiving member 52. Thus, under a state in which the piston rod 50b of the cylinder mechanism 51 extends as illustrated in Fig. 6, another end portion (distal end portion) of the coupling pin 49 is fitted into a fitting hole 55 provided at a distal end portion of a rear surface of the short piece 26b of the lever 26. Further, under a state in which the piston rod 50b of the cylinder mechanism 51 retracts in comparison with that in a state illustrated in Fig. 6, fitting of the distal end portion of the coupling pin49 in the fitting hole 55 is cancelled.

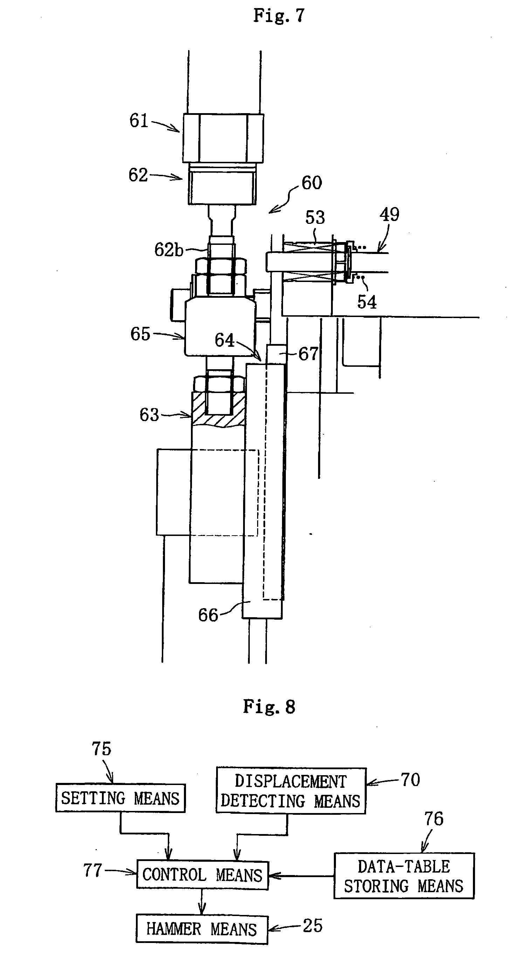

Tension of the pulling mechanism 35 is adjusted by an adjustment mechanism 60. The adjustment mechanism 60 includes an up-and-down movement mechanism 61 for moving up and down the arm 36. As illustrated in Fig. 7, the up-and-down movement mechanism 61 includes a cylinder mechanism 62, a block member 63 to which a distal end portion of a piston rod 62b of the cylinder mechanism 62 is coupled, and a linear guide mechanism 64 for guiding up-and-down movement of the block member 63. The linear guide mechanism 64 includes an up-and-down movement member 66 fixed to the block member 63 and a guide rail 67 for guiding up-and-down movement of the up-and-down movement member 66. Note that, the piston rod 62b and the block member 63 are coupled to each other through intermediation of a coupling member 65.

Thus, in accordance with extension of the piston rod 62b of the cylinder mechanism 62, the arm 36 descends, and an elastic tension force of the elastic member 39 becomes larger. In accordance with retraction of the piston rod 62b of the cylinder mechanism 62, and the elastic tension force of the elastic member 39 becomes smaller.

Incidentally, under a state in which the short piece 26b of the lever 26 is pushed up, when the piston rod 32b of the cylinder mechanism 32 retracts and fitting of the distal end portion of the piston rod 51 b in the fitting hole 55 is cancelled, the weight 27 and an elastic force of the pulling mechanism 35 cause the lever 26 to rock in a direction of the arrow C about the fulcrum A. As a result, the work W is hit. In this case, the lever 26 freely rocks about the fulcrum A, and hence is capable of absorbing a reactive force of an impact imparted by the hammer means 25. Thus, it can be said that the lever 26 is supported by a reactive-force absorbing mechanism (pivot portion 28).

Note that, near the above-mentioned small-diameter roller 31, there is arranged a proximity sensor 43 for detecting a level of the lever of the hammer means 25. A displacement sensor may be used as the position detection sensor. The proximity sensor 43 is used for the purpose of detecting a descent end of the short piece 26b of the lever and for measurement of a required time period from after the weight forms a predetermined swing-up angle and reaches the descent end. As a method of measuring the required time period, other than the proximity sensor, a non-contact type photo sensor or a contact type sensor such as a differential transformer may be used.

In this centering device, a centering operation is performed with a hitting position and a hitting force being automatically set. Thus, a control portion 81 is provided as illustrated in Fig. 1. That is, the rotary table 1 and the like are housed in a casing 80. The control portion 81 is attached to the casing 80.

As shown in Fig. 8, the control portion 81 includes setting means 75 for setting a convergence value of the eccentric amount of the work W, displacement detecting means 70 for detecting the eccentric amount of the work W, data-table storing means 76, and control means 77.

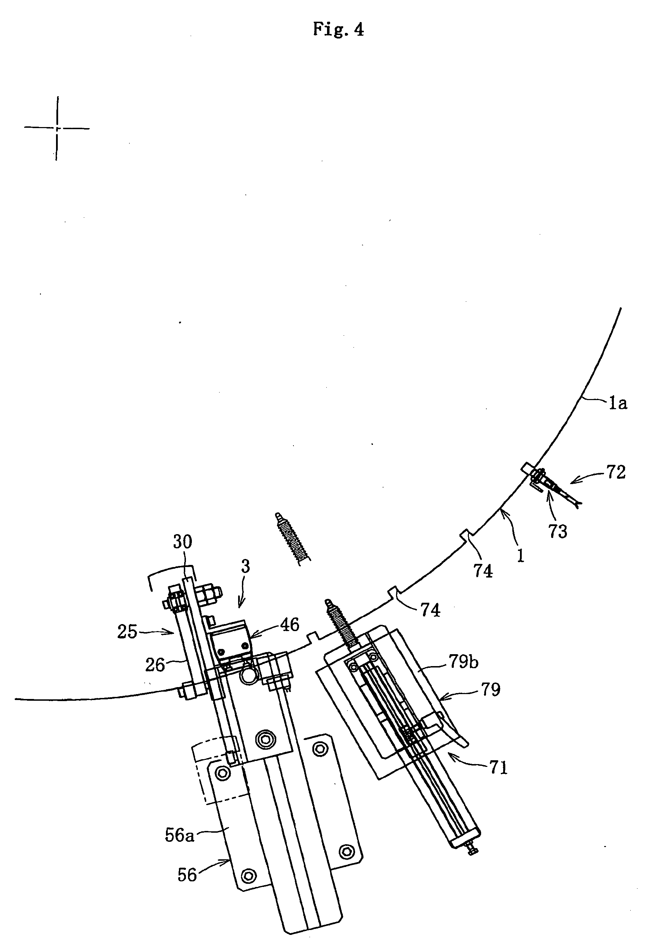

The convergence value set by the setting means 75 is an allowable convergence value of decentering of the work W. In the present invention, the centering operation continues until the eccentric amount falls within the convergence value. As illustrated in Fig. 4, the displacement detecting means 70 includes a displacement sensor 71 for detecting an eccentric degree of the work W and a phase-detection sensor 72 for detecting a rotational-angle phase of the rotary table 1. Note that, the displacement sensor 71 is installed to a support column 79 provided upright from the base plate 14 of the base 10. The support column 79 includes a column portion 79a and a receiving disc 79b provided continuously with an upper end of the column portion 79a.

The displacement sensor 71 is arranged near the impacting structure 3. The displacement sensor 71 only has to be capable of detecting the eccentric degree of the work, and hence may be of various types such as a contact type or a non-contact type.

In this case, a proximity sensor 73 is used as the phase-detection sensor 72. The proximity sensor is a sensor used instead of a mechanical switch such as a limit switch or a micro switch, for detecting proximity of a detection object in a non-contact manner. Based on operating principles, predominant proximity sensors are roughly divided into three types: a high-frequency oscillation type using electromagnetic induction, a magnetic type using a magnet, and a capacitance type using a change in capacitance. Note that, the proximity sensor 73 is also installed to the support column (not shown) provided upright from the base plate 14 of the base 10.

In this embodiment, a plurality of recess portions (dogs) 74 are provided at a predetermined pitch (fixed pitch) along an outer peripheral surface 1a of the rotary table 1 in a circumferential direction. The recess portions (dogs) 74 are detected by the proximity sensor 73. That is, through detection of the recess portions (dogs) 74 by the proximity sensor 73, the number of pulses for one round of the table 1 is counted.

Based on the eccentric amount obtained by the displacement sensor 71 and information from the proximity sensor 73 for detecting the rotational-angle phase of the table 1, the control means 77 calculates a maximum eccentric position (rotational-angle phase). Further, the control means 77 determines which position is hit and under which of the conditions (hitting force) stored in data tables (data tables stored by the data-table storing means 76) the position is hit, and issues a command to the hammer means 25. In addition, the control means 77 continues to issue centering commands until the eccentric amount falls within a preset convergence value. Control on the displacement detecting means 70 and the control means 77 are effected with use of a programmable logic controller (PLC).

Each of the data tables selecting hitting angles (hitting forces or impact forces) prepares data of two types: a positioning height of the coupling pin 49, the positioning height being set by the up-and-down movement mechanism 46 as a single-shaft actuator for determining the swing-down angle of the lever 26 of the hammer means 25; and a time period (angular speed) taken from after swinging-down of the lever 26 in a state of the swing-down angle (angle formed by the lever) to collision of the weight 27 against the work W. The data tables are prepared for approximately five stages, for example.

In this case, a dial gage is applied near the hammer means 25 on an outer periphery of the work, and hitting operations are manually performed approximately ten times. Then, sampling (measurement with use of the dial gage) is performed on a movement amount of the work W (decentering correction amount) at this time so as to calculate an average value of a movement amount. Those operations are performed correspondingly to the five stages. In this case, after positioning of the up-and-down movement mechanism 46 (positioning heights set in the data tables), the cylinder mechanism 32 lifts up the lever 26 and the coupling pin 49 so as to fit the distal end portion of the coupling pin 49 is advanced into the fitting hole 55 of the lever 26. In this manner, the lever 26 is positioned to a swing-down height, and the piston rod 32b of the cylinder mechanism 32 is caused to descend. After that, fitting of the coupling pin 49 in the fitting hole 55 of the lever 26 is cancelled. With this, the lever 26 is capable of rocking about the fulcrum A thereof as indicated by the arrow C so as to hit, with the weight 27, an outer peripheral surface of the work W.

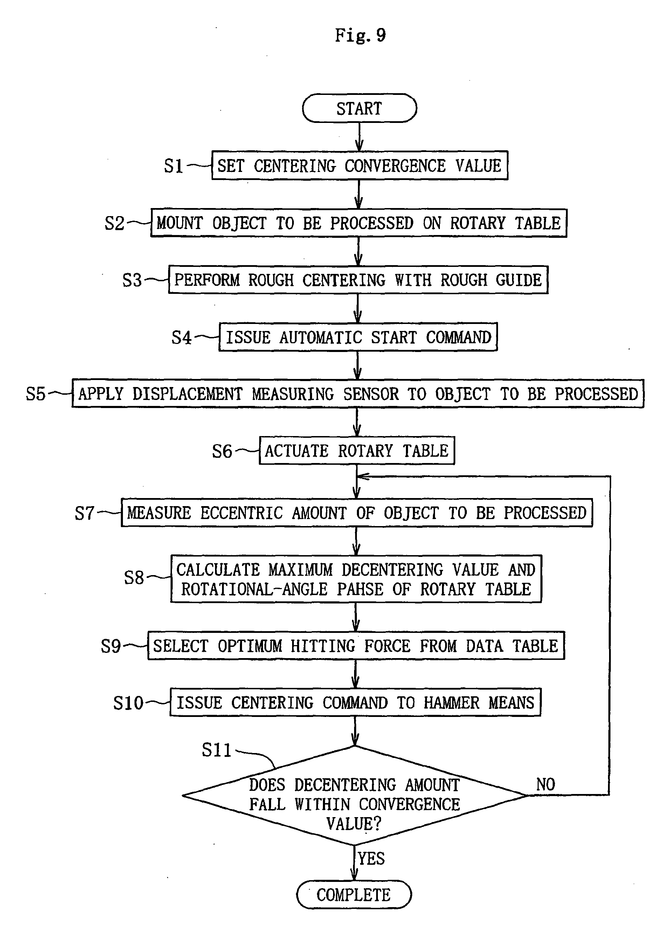

Next, with reference to, for example, Fig. 9, description is made of a centering method in which the centering device structured as described above is used. First, as indicated in Step S1, a centering convergence value with respect to the work W is set. Next, as indicated in Step S2, the work (object to be processed) W is mounted on the rotary table 1. That is, the work (object to be processed) W is placed on the work carriers 13. In this case, as indicated in Step S3, rough centering is performed (carried out) on the rough guides 18. Those are preparation steps.

Next, as indicated in Step S4, an automatic start command is issued. With this, as indicated in Step S5, the phase-detection sensor (displacement measuring sensor) 72 is brought into contact with the work (object to be processed) W. In this state, as indicated in Step S6, rotational driving of the rotary table 1 is started. In accordance with the rotation, as indicated in Step S7, an eccentric amount of the work (object to be processed) W is measured by the displacement sensor 71.

As indicated in Step S8, a maximum decentering value and the rotational-angle phase of the rotary table 1 are calculated, and as indicated in Step S9, an optimum hitting force is selected from the data tables. Then, as indicated in Step S10, a centering command is issued to the hammer means 25.

Description is made of a collaborative operation of the displacement sensor 71 for detecting an eccentric amount and the hammer means 25 for performing the centering operation. In this case, with use of the recess portions (dogs) 74 provided at a fixed interval (predetermined angle) on an outer periphery of the rotary table 1 and the proximity sensor 73 provided near the rotary table 1, setting is made so that the number of pulses for one round of the table 1 is counted. Further, minute intervals cannot be secured between the mechanically provided recess portions (dogs) 74, and hence, electrical partitioning is performed when necessary so that angle detection is performed with higher accuracy. In addition, the rotary table 1 is provided with an original-point sensor which effects output once during one round.

An angular speed obtained by a set table-rotation number is calculated. Based on the angular speed obtained under the above-mentioned conditions and on data obtained from the phase-detection proximity sensor and the original-point sensor, specification is made as to a degree corresponding to a position corresponding to a maximum fluctuation position, the position being with reference to the original point of the table 1. With use of the specified information, calculation is performed of a timing (advance angle) at which the hammer hits a maximum eccentric position. Through such control, even when the set speed of the rotary table 1 is changed, specification is constantly made as to a position-to-be-hit which is advanced from the maximum eccentric position obtained by the displacement sensor 71. As a matter of course, when the swing-down angle of the lever 26 is set to be higher, an angular speed of pivot movement of the hammer means 25 becomes higher. Thus, a hitting position is calculated also in consideration of conditions obtained from the data tables.

Based on parameters obtained from the data tables, the single-shaft actuator (up-and-down movement mechanism 46) is positioned in a height direction. Next, the piston rod 32b of the cylinder mechanism 32 extends, and the short piece 26b of the lever 26 is lifted up. In this state, the piston rod 51b of the cylinder mechanism 51 extends so that the coupling pin 49 is fitted into the fitting hole 55 of the short piece 26b of the lever 26. In this manner, an angle of hitting performed by the lever 26 is determined. After that, the piston rod 32b of the cylinder mechanism 32 retracts so that the piston rod 32b is separated from the small-diameter roller 31 of the lever 26. Then, fitting of the coupling pin 49 in the fitting hole 55 of the lever 26 is cancelled. With this, the lever 26 is capable of rocking about the fulcrum A thereof as indicated by the arrow C so as to hit, with the weight 27, an outer peripheral surface of the work W. In this manner, a centering operation can be performed.

After that, proceeding to Step S11 is made, and a judgment is made as to whether a decentering amount falls within a convergence value. That is, when the decentering amount falls within the convergence value, the centering operation is ended (completed), and when the decentering amount does not fall within the convergence value, a return to Step S7 is made. In a case of automatic driving, the centering operation may be repeated as follows until an eccentric amount falls within the convergence value: presetting a target centering amount (target convergence value); and calculating, with use of a combination of the displacement sensor 71 and the proximity sensor 73 for rotary-table phase detection, a relation between an eccentric amount and a phase at the time of one round of the work.

In the present invention, it suffices that, in accordance with a detected eccentric amount, an impact force is imparted to the work W with use of the hammer means 25. Thus, centering can be easily performed. In addition, an optimum hitting force is selected from preset conditions based on a detected value, and hence optimum centering can be performed. Thus, centering can be performed with relatively high accuracy.

When an impact force is imparted to the work W at an angular speed determined based on a pivot angle degree and a pivoting speed of the lever 26, collision energy (impact force) generated by pivotal movement of the weight 27 about the fulcrum A is imparted. Thus, an object can be moved with a force smaller than a pushing force for moving an object in a horizontal direction. In addition, an impact reactive force to the hammer means 25 can be alleviated. Thus, durability of the device can be enhanced, and stable centering can be performed over a long period of time. In addition, the hammer means 25 itself constitutes a reactive-force absorbing structure, and hence it is unnecessary to separately constitute a reactive-force absorbing structure. Thus, space saving and cost reduction of the entire device can be achieved.

According to the method of the present invention, centering can be performed until a target convergence value is achieved, and hence centering can be performed with high accuracy.

Next, Figs. 10 to 16 illustrate another embodiment, which is not claimd. The impacting structure 3 in this case is installed also to a support column 126 provided upright from the base plate 14 of the base 10. The hammer means 25 of the impacting structure 3 includes a rod 96 capable of reciprocating in an axial direction, a weight 97 attached to a distal end of the rod 96, and an elastic member 98 for exerting a resilient force for bringing the rod 96 close to the work W in the axial direction so that the weight 97 is caused to collide against the work W. The support column 126 includes a column portion 126a and a receiving disc 126b provided continuously with an upper end of the column portion 126a, and a base plate 100 is placed on the receiving disc 126b and fixed thereto.

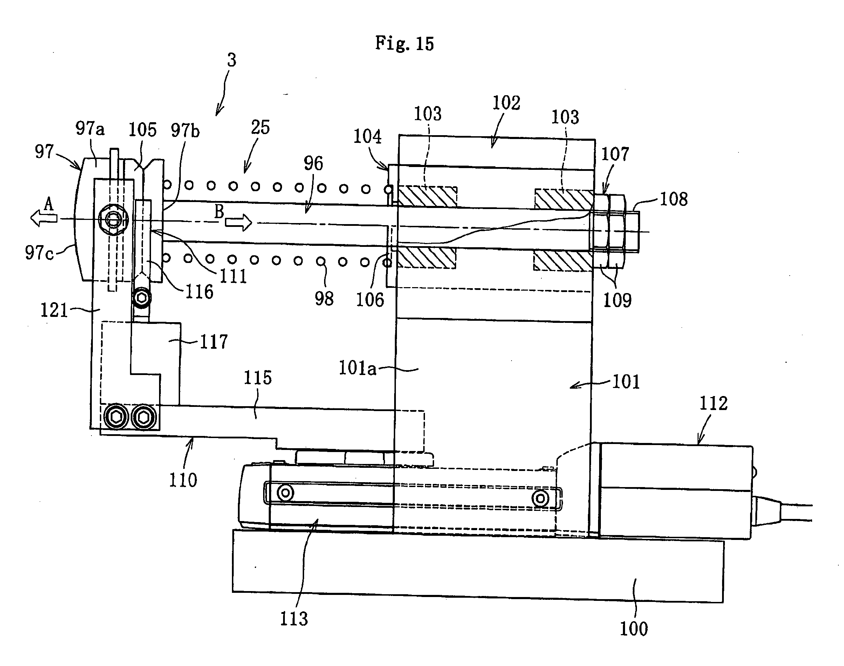

A support board 101 is provided upright on the base plate 100, and a rod-support member 102 is attached onto the support board 101. That is, the rod-support member 102 includes a bearing structure 104 housing bearings 103 and 103, and the rod 96 is slidably fitted along an axial direction thereof in the rod-support member 102 through the bearings 103 and 103 of the bearing structure 104. Note that, on a weightside end surface of the bearing structure 104, there is provided a recessed portion 106 (refer to Fig. 15) for elastic-member fitting. Further, the support board 101 includes a pair of leg members 101a and 101a, and an upper wall 101b for coupling upper ends of the leg members 101a and 101a to each other. The rod-support member 102 is arranged on the upper wall 101b.

The weight 97 is constituted by a disc body provided with a circumferential groove 105 having a V shape in cross section on a proximal-end side of an outer peripheral surface 97a, and a proximal-end surface 97b is coupled to the distal end of the rod 96. For example, a threaded portion may be provided at the distal end of the rod 96, and the threaded portion may be threadedly engaged with a threaded hole provided in the proximal end surface 97b of the weight 97. With this, the weight 97 is detachable with respect to the rod 96. Between the weight 97 and the rod-support member 102, there is interposed a spring member formed of a coil spring constituting the elastic member 98. Further, a distal end surface 97c of the weight 97 exhibits a convex curved surface.

A stopper member 107 is attached to an end portion on an anti-weight side of the rod 96. That is, a threaded portion 108 is provided to the end portion on the anti-weight side of the rod 96, and nut members 109 and 109 constituting the stopper member 107 are threadedly mounted to the threaded portion 108. Thus, in a free state, a resilient force of the elastic member 98 between the weight 97 and the rod-support member 102 causes the weight 97 to be pressed in the direction of an arrow A of Fig. 15 and the stopper member 107 to be held in contact with the rod-support member 102. Further, in this state, when the weight 97 is pressed in the direction of an arrow B, the weight 97 and the rod 96 slide in the direction of the arrow B against the resilient force of the elastic member 98.

Sliding of the weight 97 in the direction of the arrow B against the resilient force of the elastic member 98 is performed by an operating mechanism 110. The operating mechanism 110 includes a chuck mechanism 111 which is engaged with the weight 97, and a moving mechanism 112 for moving the chuck mechanism 111 parallel with the axial direction of the rod 96.

The moving mechanism 112 is constituted by a linear guide mechanism which is a single-shaft actuator. The linear guide mechanism includes a mechanism main body 113 fixed onto the base plate 100 and a movable table 115 reciprocating along a longitudinal direction of the main body 113. Further, the chuck mechanism 111 includes a pair of claw members 116 and 116 which are engaged with the circumferential groove 105 of the weight 97, and a drive portion 117 for performing an opening/closing operation of the pair of claw members 116 and 116.

Each of the claw members 116 and 116 is formed in a triangular shape in cross section so as to be fitted to the circumferential groove 105. The claw members 116 and 116 are arranged along a vertical direction and positioned symmetrically by 180° with respect to an axis of the weight 97. The drive portion 117 includes a casing 118 arranged on a table 115 and a drive mechanism (not shown) incorporated in the casing 118, such as a ball screw mechanism. The claw members 116 and 116 are coupled to the drive mechanism through intermediation of attachment pieces 119 and 119.

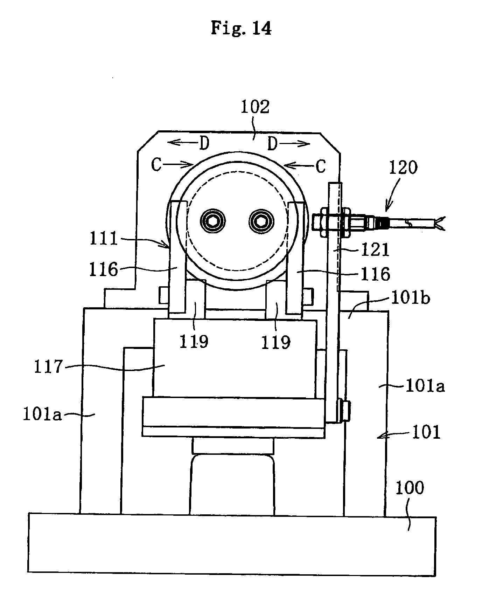

Thus, driving of the drive mechanism causes the claw members 116 and 116 to come close to and be separated from each other. That is, as illustrated in Fig. 14, each of the claw members 116 and 116 simultaneously moves in the direction of an arrow C, with the result that the claw members 116 and 116 come close to each other and enter a state of being engaged with the circumferential groove 105 of the weight 97. Further, each of the claw members 116 and 116 simultaneously moves in a direction of an arrow D, with the result that the claw members 116 and 116 are separated, and the engaged state is cancelled.

Under a close state in which the claw members 116 and 116 of the moving mechanism 112 are brought close to each other, that is, under a state in which the claw members 116 and 116 are engaged with the circumferential groove 105 of the weight 97, the linear guide mechanism 113 is driven, and the weight 97 is stopped to be appropriately positioned. After that, the claw members 116 and 116 are separated from each other so as to achieve an open state. With this, a state is cancelled, in which the weight 97 is regulated by the moving mechanism 112, and the weight 97 collides against the work W by the resilient force of the elastic member 98. That is, the outer peripheral surface of the work W can be hit by the weight 97, and centering operation is performed.

Further, near the weight 97, there is arrange a position detector 120 constituted by a proximity sensor for detecting a position of the weight 97. That is, a support arm 121 is provided upright from the table 115, and the position detector 120 is attached to a distal end portion of the support arm 121. A flange portion 122 is provided to the outer peripheral surface 97a of the weight 97, and the position detector 120 faces a radially outer surface of the flange portion 122. As the position detector 120, other than the proximity sensor, a non-contact type photo sensor or a contact type sensor such as a differential transformer may be used.

The centering device illustrated in Figs. 10 to 16 is also provided with the control portion illustrated in Fig. 8. Thus, this centering device is also capable of performing the centering work along the flow chart shown in Fig. 9. Each of the data tables selecting hitting angles (hitting forces or impact forces) prepares data of two types: a position to which (distance by which) the weight 97 is retracted, and a time period during which the weight 97 having started to move from the retracted position collides against the work W (arrival time period). The data tables are prepared for approximately five stages, for example. Note that, as a matter of course, when the weight 97 and the rod 96 are pulled more backward, a collision speed becomes higher. Thus, a hitting position is calculated also in consideration of conditions obtained from the data tables.

Accordingly, similarly to the hammer means 25 of the centering device in the above-mentioned embodiment, the hammer means 25 of the centering device illustrated in Figs. 10 to 16 is also capable of hitting the work W, and hence is capable of performing centering of the work W.

In this embodiment, the weight 97 is detachable with respect to the rod 96, and hence can be exchanged. Therefore, the mass of the weight 97 can be changed. Further, a change of the retracted position of the weight 97 enables a change of the elastic force of the elastic member. Thus, the impact force can be adjusted by the change(s) of the elastic force of the elastic member 98 and/or the mass of the weight 97. That is, the change of only the elastic force of the elastic member 98 or only the mass of the weight 97, or the changes of both the elastic force of the elastic member 98 and the mass of the weight 97 enables adjustment of the impact force. In this manner, when the impact force can be adjusted by the change(s) of the elastic force of the elastic member 98 and/or the mass of the weight 97, an impact force can be imparted correspondingly to a correcting amount. As a result, a time period for the centering work can be saved.

Incidentally, the work W includes a workpiece processed with a vertical lathe or a horizontal lathe and a workpiece processed with a vertical grinder or a horizontal grinder. As just described above, the centering device according to the present invention may be used for the vertical lathe and the horizontal lathe, and the vertical grinder and the horizontal grinder. Thus, working with the lathes or the grinders can be performed with higher accuracy. Further, after detection of the eccentric amount of the work W, the eccentric amount can be corrected even under a state in which rotation of the work W is stopped.

Hereinabove, description is made of the embodiments of the present invention. The present invention is not limited to the above-mentioned embodiments, and various modifications may be made thereto. For example, the data tables are prepared not only for five stages, and may be prepared arbitrarily for stages more or less than five. Similarly, the number of manual hitting at the time of performing sampling of the movement amount of the work W (decentering correction amount) is not limited to ten. Further, although the number of the recess portions 74 for the proximity sensor may be determined arbitrarily, measurement accuracy is deteriorated with the number being excessively small. Meanwhile, workability is deteriorated with the number being excessively large. Thus, in accordance with a size of the work W, a rotational speed of the rotary table 1, and the like, the number of the recess portions 74 can be variously set. Further, a size of each of the recess portions 74 may be varied as long as being detectable by the sensor to be used. A size and a weight of the weight 27 (97) may be varied as long as an optimum hitting force can be obtained.

Various materials can be selected for the weight 97 to be used as long as the following can be secured: strength with which deformation, damage, and the like of the weight 97 are prevented at the time of hitting of the work W; and a mass with which a desired hitting force can be imparted. Further, as described above in this embodiment, although being a convex circular-arc surface, the hitting surface of the weight 97 with respect to the work (distal end surface 97c in this case) may be varied as long as a desired hitting force can be imparted to the work W. Thus, the whole shape of the weight 97 is not limited to that of a disc body as in this embodiment.

### Industrial Applicability

The work is not limited to an inner race and outer race of a bearing, and may include a disc-like workpiece other than a ring-shaped workpiece. Further, the posture of the work may be axially perpendicular or axially horizontal.

### Reference Signs List

- 1: rotary table
- 25: hammer means
- 26: lever
- 27: weight
- 70: displacement detecting means
- 71: displacement sensor
- 72: phase-detection sensor
- 96: rod
- 97: weight
- 98: elastic member
- W: work

## Claims

1. A centering device, comprising:
a rotary table (1) for rotating a work (W);
displacement detecting means (70) for detecting an eccentric amount of the work which rotates through intermediation of the rotary table (1); and
hammer means (25) for correcting, by means of an impact on the work (W), the eccentric amount detected by the displacement detecting means (70) **characterized in that**
a) the displacement detecting means (70) comprises:
a displacement sensor (71) for detecting an eccentric degree of the work (W) and a phase detection sensor (72) for detecting a rotational angle phase of the table (1);
b) the hammer means (25) comprises a lever (26) capable of pivotable movement about a fulcrum (A) on a proximal end side and a weight (27) attached to a distal end of the lever (26); a swing-down height of the lever (26) being changeable;
c) an optimum hitting force is selectable from preset conditions based on the eccentric degree detected by the displacement sensor (71) and the rotational angle phase detected by the phase detection sensor (72); and
d) in order to obtain the optimum hitting force, the swing-down height of the lever (26) is determinable.

2. A centering method, using the centering device according to claim 1, comprising:
detecting an eccentric amount of a work (W) which rotates through intermediation of a rotary table (1);
performing, with an impact force imparted by hammer means (25) onto the work (W), a centering operation for correcting the eccentric amount; and
repeating the centering operation until the eccentric amount reaches a preset target convergence value.

3. A centering method according to claim 2, wherein
a relation between the eccentric amount of the work (W) and the phase of the rotary table (1) at a time of one round of the work (W) is calculated; and
the centering operation is repeated until the eccentric amount falls within the target convergence value.

4. A method according to claim 2, wherein, after detection of the eccentric amount of the work (W), the eccentric amount is corrected under a state in which rotation of the work (W) is stopped.

## Patentansprüche

1. Zentriervorrichtung mit:
einem Drehtisch (1), um ein Werkstück (W) zu drehen;
Versatz-Erfassungsmitteln (70), um den Betrag der Exzentrizität des Werkstücks zu erfassen, das sich mittels des Drehtisches (1) dreht; und
Hammermitteln (25), um durch einen Schlag auf das Werkstück (W) den Betrag der Exzentrizität zu korrigieren, der durch das Versatz-Erfassungsmittel (70) erfasst wurde;
**dadurch gekennzeichnet, dass**
a) das Versatz-Erfassungsmittel (70) aufweist:
einen Versatzsensor (71), um einen Grad der Exzentrizität des Werkstücks (W) zu erfassen, sowie einen Phasen-Erfassungssensor (72), um eine Phase des Drehwinkels des Tisches (1) zu erfassen;
b) das Hammermittel (25) einen Hebel (26), der zu einer Schwenkbewegung um einen Drehpunkt (A) an einer proximalen Endseite fähig ist, und ein an einem distalen Ende des Hebels (26) befestigtes Gewicht (27) aufweist, wobei die Höhe, aus der der Hebel (26) herabschwingt, verändert werden kann;
c) eine optimale Schlagkraft aus vorher festgelegten Bedingungen auswählbar ist, basierend auf dem Grad der Exzentrizität, der durch den Versatzsensor (71) erfasst wurde, und auf der Phase des Drehwinkels, die von dem Phasen-Erfassungssensor (72) erfasst wurde; und
d) dass die Höhe, aus der der Hebel (26) herabschwingt, bestimmt werden kann, um die optimale Schlagkraft zu erhalten.

2. Zentrierverfahren, bei dem die Zentriervorrichtung nach Anspruch 1 Anwendung findet, mit folgenden Schritten:
Erfassen des Betrags der Exzentrizität eines Werkstücks (W), das sich mittels eines Drehtisches (1) dreht;
Ausführen eines Zentriervorgangs mittels einer Schlagkraft, die durch Hammermittel (25) auf das Werkstück (W) ausgeübt wird, um den Betrag der Exzentrizität zu korrigieren; und
Wiederholen des Zentriervorgangs, bis der Betrag der Exzentrizität einen vorher festgelegten Zielkonvergenzwert erreicht.

3. Zentrierverfahren nach Anspruch 2, bei dem
ein Verhältnis zwischen dem Betrag der Exzentrizität des Werkstücks (W) und der Phase des Drehtisches (1) im Verlauf einer Runde des Werkstücks (W) berechnet wird; und
der Zentriervorgang wiederholt wird, bis der Betrag der Exzentrizität in den Bereich des Zielkonvergenzwerts fällt.

4. Verfahren nach Anspruch 2, bei dem nach der Erfassung des Betrags der Exzentrizität des Werkstücks (W) der Betrag der Exzentrizität in einem Zustand korrigiert wird, in dem die Drehung des Werkstücks (W) gestoppt wird.

## Revendications

1. Dispositif de centrage, qui comprend :
une table rotative (1) destinée à faire tourner une pièce (W) ;
un moyen de détection de déplacement (70) destiné à détecter une quantité de mouvement excentrique de ladite pièce qui tourne par le biais de ladite table rotative (1) ; et
un marteau (25) destiné à corriger, par le biais d'un impact sur ladite pièce (W), ladite quantité de mouvement excentrique détectée par ledit moyen de détection de déplacement (70),
**caractérisé en ce que**
a) ledit moyen de détection de déplacement (70) comprend :
un capteur de déplacement (71) destiné à détecter un degré de mouvement excentrique de ladite pièce (W)
et un capteur de détection de phase (72) destiné à détecter une phase d'angle de rotation de ladite table (1) ;
b) ledit marteau (25) comprend un levier (26) capable de pivoter autour d'un axe (A) d'un côté d'extrémité proximale, et un poids (27) relié à une extrémité distale dudit levier (26) ; la hauteur de basculement vers le bas dudit levier (26) pouvant être modifiée ;
c) une force de percussion optimale peut être choisie parmi des conditions prédéterminées sur la base dudit degré de mouvement excentrique détecté par ledit capteur de déplacement (71) et de ladite phase d'angle de rotation détectée par ledit capteur de détection de phase (72) ; et
d) afin d'obtenir ladite force de percussion optimale, ladite hauteur de basculement vers le bas dudit levier (26) peut être déterminée.

2. Procédé de centrage qui utilise ledit dispositif de centrage selon la revendication 1, qui comprend :
la détection d'une quantité de mouvement excentrique d'une pièce (W) qui tourne à l'aide d'une table rotative (1) ;
la réalisation, à l'aide d'une force de percussion transmise par un marteau (25) à ladite pièce (W), d'une opération de centrage destinée à corriger ladite quantité de mouvement excentrique ; et
la répétition de ladite opération de centrage jusqu'à ce que ladite quantité de mouvement excentrique atteigne une valeur de convergence cible prédéfinie.

3. Procédé de centrage selon la revendication 2, dans lequel
une relation est calculée entre ladite quantité de mouvement excentrique de ladite pièce (W) et ladite phase de ladite table rotative (1) lors d'un tour de ladite pièce (W) ; et
ladite opération de centrage est répétée jusqu'à ce que ladite quantité de mouvement excentrique corresponde à ladite valeur de convergence cible.

4. Procédé selon la revendication 2, dans lequel, après la détection de ladite quantité de mouvement excentrique de ladite pièce (W), ladite quantité de mouvement excentrique est corrigée dans un état dans lequel la rotation de ladite pièce (W) est arrêtée.
